# EUROPÄISCHE PATENTSCHRIFT

(11) **EP 1 502 495 B1**
(45) Veröffentlichungstag und Bekanntmachung des Hinweises auf die Patenterteilung: **14.11.2007**
(21) Anmeldenummer: 04017616.6
(22) Anmeldetag: 26.07.2004
(51) Int. Cl.: A01F 15/07

(54) **Vorrichtung zum Umhüllen oder Verpacken von insbesondere landwirtschaftlichen Erntegutballen**
Device for wrapping or packing in particular bales of harvested material
Appareil pour emballer en particulier des balles agricoles

(30) Priorität: 30.07.2003 DE 10334678
(43) Veröffentlichungstag der Anmeldung: 02.02.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); van Bassen, Aloys, 49832 Freren (DE); Schulz, Stephan, 48369 Saerbeck (DE)

(56) Entgegenhaltungen:
- EP-A- 0 367 529
- DE-A- 4 404 225
- FR-A- 2 679 105
- GB-A- 2 249 077
- US-A- 5 822 967

## Beschreibung

Die Erfindung bezieht sich auf eine Vorrichtung zum Umhüllen oder Verpacken von insbesondere landwirtschaftlichem Erntegutballen mit einer Wickeleinheit und einer diesen zugeordneten Wickeltischeinrichtung zur Aufnahme des Erntegutballens, wobei nach dem Umhüllen bzw. Verpacken des Erntegutballens eine Umhüllungs- oder Verpackungsmaterialbahn mittels eines Trennelementes beaufschlagbar ist.

Eine Vorrichtung der vorgenannten Art ist z.B. aus der DE 44 04 225 A1 bekannt. Bei dieser Ballenumhüllungsvorrichtung wird das Umhüllungsfolienmaterial zu einem Schlauch bzw. einer Wulst zusammengeführt und danach entlang einer feststehenden Messeranordnung in Gestalt einer Klemmzange bzw. Schneidzange geführt. Dazu hat das gesamte Folienbahnmaterial einen sehr langen Transportweg in Richtung der feststehenden Klemm- bzw. Schneidzange durchzuführen. Der Schlauch bzw. die Materialwulst ist mit dem feststehenden Klemmzangen- bzw. Schneidzangenelement nur schwer zu durchtrennen bzw. so zu perforieren, dass bei nachfolgender Zugbelastung die Folienbahn an der gewünschten Stelle reißt. Das kann dazu führen, dass das Folienbahnmaterial nicht richtig getrennt wird, sondern an einer beliebigen Stelle abreißt. Die Folge davon ist, dass Folienreste an dem Klemm- und Schneidzangenelement haften bleiben und dort zu Störungen führen, deren Beseitigung Nacharbeiten verursacht. Des weiteren sind die langen Transport- und Führungswege einem gewünschten schnellen Verpackungsvorgang hinderlich.

In der FR 2 679 105 A1 ist eine Vorrichtung gezeigt und beschrieben, die ebenfalls zum Umhüllen von insbesondere Erntegutballen vorgesehen ist. Der auf einer um eine vertikale Achse rotierbaren Wickeltischeinrichtung aufliegende Erntegutballen wird beim Umhüllungsvorgang mit einer Folienbahn umwickelt, welche von einer stationären Folienvorratsrollenanordnung abgezogen wird. Zum Abtrennen der Folienbahn nach dem Fertigstellen des Umhüllungsvorganges ist der Folienvorratsrollenanordnung eine Klemm- und Schneideinrichtung zugeordnet, bei der die Folienbahn beim Halten (Festklemmen) zu einem Strang zusammengerafft wird, so dass auch hier neben einem hohen konstruktiven Aufwand und einer Vielzahl an verschleiß- und störungsanfälligen Bauteilen die bereits angegebenen Nachteile auftreten.

Es ist Aufgabe der vorliegenden Erfindung, eine Vorrichtung zum Umhüllen oder Verpacken von insbesondere landwirtschaftlichem Emtegutballen der eingangs genannten Art zur Verfügung zu stellen, bei der der Trennvorgang des Umhüllungs- oder Verpackungsmaterials sicher und zügig durchzuführen ist.

Zur Lösung dieser Aufgabe zeichnet sich die Vorrichtung zum Umhüllen und Verpacken von insbesondere landwirtschaftlichem Erntegutballen der eingangs genannten Art dadurch aus, dass das Trennelement bewegbar abgestützt und aus einer Außerbetriebsstellung in eine die Umhüllungs- oder Verpackungsmaterialbahn beaufschlagende Betriebsstellung überführbar ist und das Trennelement in Zusammenwirkung mit einem Klemmelement und einem Klemmbalken die Umhüllungs- und Verpackungsmaterialbahn während des Trennvorgangs einklemmt, wobei das Klemmelement und der Klemmbalken schnabelförmig auf und zu bewegbar sind und eine Faltung der Umhüllungs- oder Verpackungsmaterialbahn auf etwa die Hälfte ihrer Breite oder weniger erfolgt, wobei das Klemmelement von einem Stellmittel in eine hochverschwenkte Öffnungsstellung und aus dieser von dem Stellmittel in seine Klemmstellung überführbar ist.

Damit ist eine Vorrichtung zur Verfügung gestellt, bei der nicht die Umhüllungs- bzw. Verpackungsmaterialbahn bis hin zu einem feststehenden Trennelement geführt werden muss, sondern das Trennelement selbst hin zur zu beaufschlagenden Umhüllungs- bzw. Verpackungsmaterialbahn gebracht wird. Dabei ist die Bewegungsenergie des Trennelementes, die es während seiner Hinbewegung zur Materialbahn erfährt, auch dazu zu nutzen, den Trennvorgang bzw. einen derartigen Perforationsvorgang einzuleiten, durch den die Umhüllungsbahn sicher an der gewünschten Stelle getrennt werden kann. Die Bewegungsabläufe des Trennelementes sind wesentlich freizügiger vorzusehen und konstruktiv so zu berücksichtigen, dass die Folienbahn optimal geführt werden kann.

Bevorzugterweise ist das Trennelement in seiner Außerbetriebsstellung im wesentlichen horizontal gelegen und hat ein Mitnehmerelement mit dem die Wickeltischeinrichtung bzw. ein mit der Wickeltischeinrichtung verbundenes Aktivierungsteil im Mitnehmersinn korrespondiert. Die Wickeltischeinrichtung ist vorzugsweise derart ausgebildet, dass diese in der Stellung, in der der Erntegutballen umhüllt wird, im wesentlichen horizontal ausgerichtet ist. Ist der Erntegutballen fertig verpackt bzw. umhüllt bzw. neigt sich der Umhüllungsvorgang dem Ende zu, ist bevorzugterweise der Wickeltisch der Wickeltischeinrichtung schräg in eine Entladestellung zu verstellen, so dass der fertig umwickelte Erntegutballen abgeladen werden kann. Um diese Schrägstellungsbewegung zu nutzen, sieht eine Weiterbildung der Erfindung vor, dass mit der Schrägstellung des Wickeltisches über einen Mitnehmer das Trennelement in seine Betriebsstellung überführt wird und in Richtung der Umhüllungsbahn hochschnellt. Die dabei vorhandene Energie kann genutzt werden, um mit einer entsprechenden Andrückkraft auf die Umhüllungsbahn einzuwirken.

Gemäß einem weiteren vorteilhaften Aspekt der Erfindung wirkt das Trennelement zusammen mit einem Klemmelement, das im wesentlichen zangenförmig zusammen mit einem Klemmbalken gestaltet ist und die Umhüllungsbahn während des Trennvorganges einklemmt. Desgleichen kann diese Klemmvorrichtung genutzt werden, um die Umhüllungsbahn zu falten, und zwar dergestalt, dass die Umhüllungsbahn auf etwa die Hälfte ihrer Breite oder weniger zusammengefaltet wird und also mehrlagig von dem Trennelement zu bearbeiten ist.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: ein Ausführungsbeispiel einer Vorrichtung nach der Erfindung mit einem auf einem Wickeltisch einer nicht näher dargestellten landwirtschaftlichen Erntemaschine gelegenen Erntegutballen im Verlaufe des Umhüllungsvorganges in einer perspektivischen Darstellung,
- Fig. 2: das Ausführungsbeispiel nach Fig. 1 in einer perspektivischen Darstellung nach dem Ergreifen der Umhüllungs- bzw. Verpackungsmaterialbahn durch eine Klemmeinrichtung vor dem Abtrennen des Bahnmaterialabschnittes,
- Fig. 3: das Ausführungsbeispiel nach Fig. 1 in einer Phase unmittelbar nach dem Durchtrennen der Umhüllungs- und Verpackungsmaterialbahn,
- Fig. 4: ein Ausführungsbeispiel eines Klemmelementes in einer Darstellung gemäß Fig.1,
- Fig. 5: das Ausführungsbeispiel des Klemmelementes in einer Darstellung gemäß Fig.2,
- Fig. 6: das Ausführungsbeispiel des Klemmelementes in einer Darstellung gemäß Fig.3.

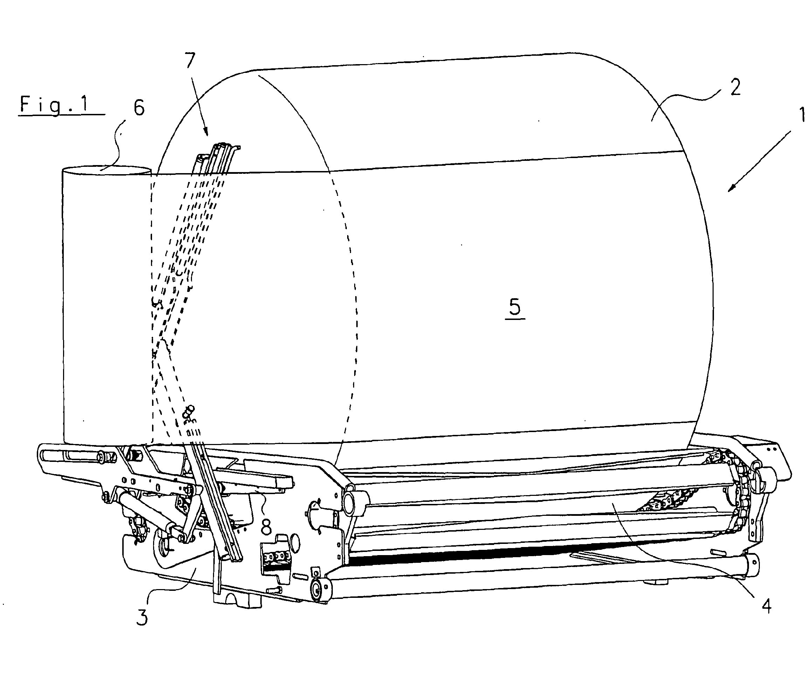

In der Zeichnung sind grundsätzlich gleichwirkende Teile mit übereinstimmenden Bezugsziffern versehen. Die Vorrichtung zum Umhüllen oder Verpacken ist in dem dargestellten Ausführungsbeispiel einer nicht im einzelnen dargestellten landwirtschaftlichen Erntemaschine, beispielsweise einer Rundballenpresse zugeordnet und allgemein mit 1 beziffert. Diese umfasst eine Wickeltischeinrichtung 3, auf der ein geformter Erntegutballen 2 gelegen ist und über angetriebene Förderelemente 4 während des Wickelvorganges in eine Drehbewegung versetzt wird. Die Umhüllungsbahn 5 wird von einer Vorratsrolle 6 entnommen. Diese Vorratsrolle 6 ist auf einem Wickelkörper gehalten, der - nicht im einzelnen dargestellt - kreisend um den Ballen 2 bewegt werden kann. Der Umhüllungsbahn 5 ist eine allgemein mit 7 bezeichnete Klemmeinrichtung zugeordnet, an der auch ein Trennelement 8, das aus der in Fig. 1 ersichtlichen, im wesentlichen horizontal ausgerichteten Außerbetriebsstellung in die hochverschwenkte Betriebsstellung überführt werden kann, angeordnet ist.

In der Darstellung nach Fig. 1 befindet sich der Erntegutballen 2 in einem noch nicht verpackten Zustand während des Umhüllungsvorganges. Die Klemmeinrichtung, die nachfolgend näher beschrieben werden wird, befindet sich in einem geöffneten Zustand und das Trennelement 8 in seiner Außerbetriebsstellung.

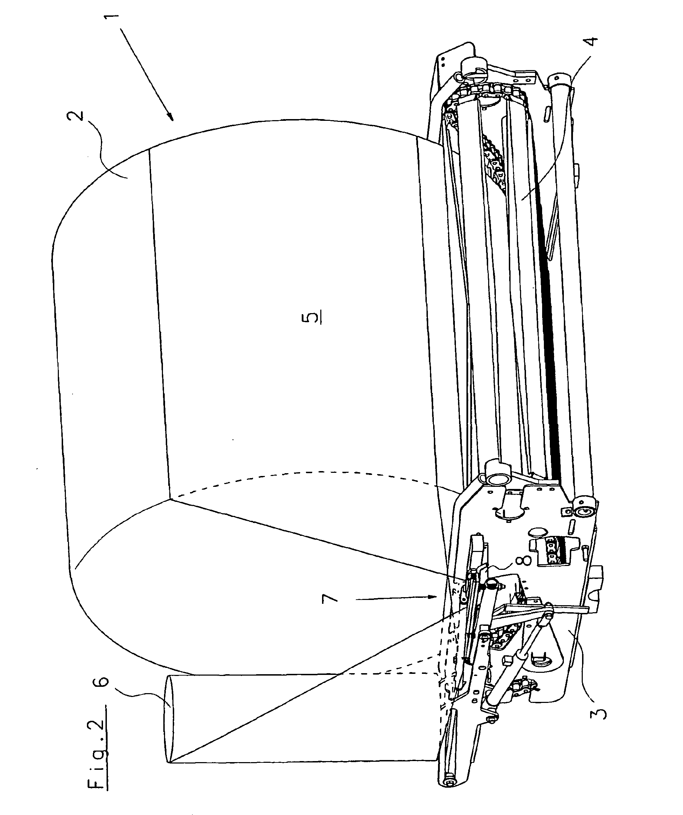

In Fig. 2 ist der Erntegutballen 2 im wesentlichen fertig verpackt und die Klemmeinrichtung 7 ist geschlossen, hat dabei die Umhüllungsbahn 5 ergriffen und zu einer mehrlagigen Bahn gefaltet, so dass die Umhüllungsbahn auf etwa die Hälfte ihrer Breite oder weniger reduziert ist. In diesem Zustand ist die Umhüllungsbahn 5 durch die Klemmeinrichtung 7 festgeklemmt. Der Wickeltisch der Wickeltischeinrichtung 3 befindet sich in diesem Endzustand des Wickelvorganges noch in seiner horizontalen Umhüllungsstellung.

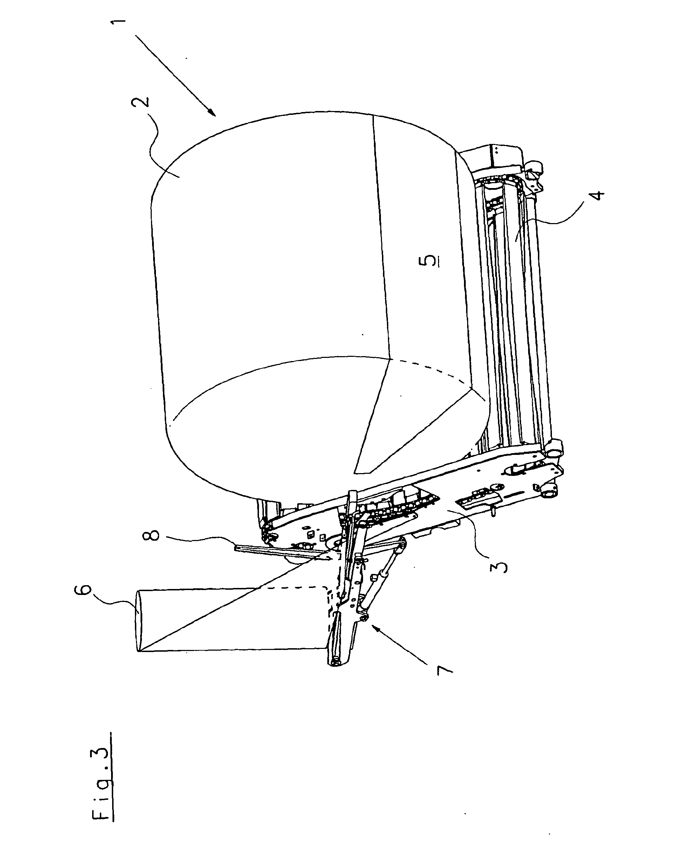

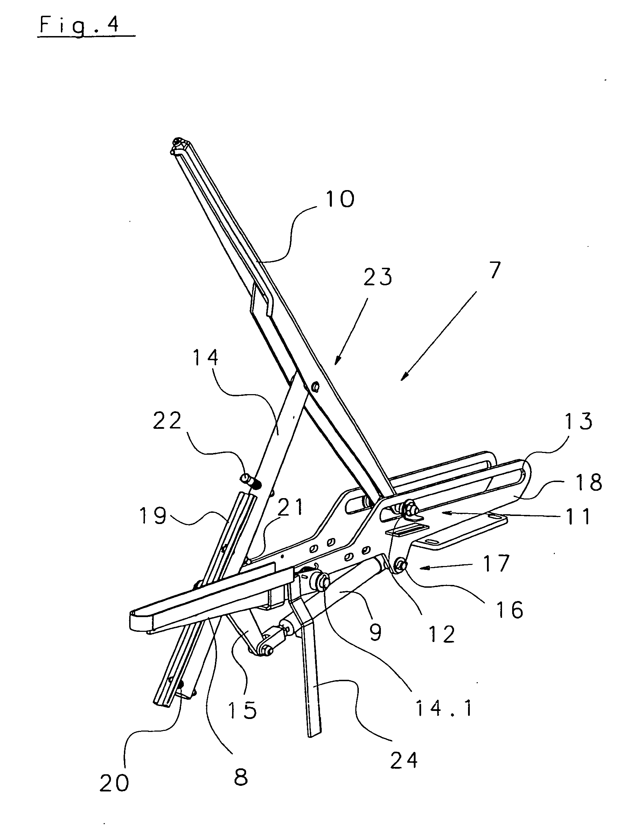

In Fig. 3 ist ein Zustand dargestellt, in dem das Umhüllungs- bzw. Verpackungsmaterial bzw. die entsprechende Bahn soeben von dem Trennelement 8 durchtrennt wurde. Dabei ist die Klemmeinrichtung 7 fest geklemmt gehalten, das Trennelement 8 ist hochgeschnellt und hat die Umhüllungsbahn durchtrennt, und zwar aktiviert durch den Wickeltisch, der über Mitnehmer auf das Trennelement 8 eingewirkt hat, während er in seine schräggestellte Entladestellung überführt worden ist, in der der fertig umhüllte Erntegutballen 2 von dem Wickeltisch abrollen kann. In den Fig. 4, 5 und 6 ist die Klemmeinrichtung 7 mit zugeordnetem Trennelement 8 näher dargestellt.

Die Klemmeinrichtung 7 weist in dem dargestellten Ausführungsbeispiel ein bewegliches Stellmittel in Gestalt eines Hubzylinders 9 auf. Sie hat zudem ein Klemmelement 10, das an seinem hinteren Ende 11 eine Bolzenschraubverbindung 12 hat und in einer schlitzartigen Längsführung 13 in einem Gehäuse geführt ist, an dem auch der Hydraulikzylinder 9 abgestützt ist.

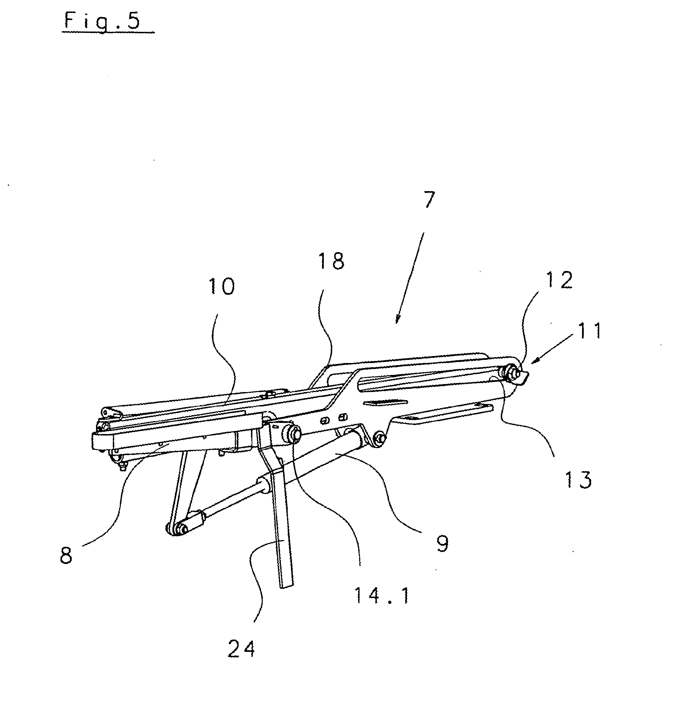

Die Klemmeinrichtung 7 hat neben dem Klemmelement 10 noch einen Klemmbalken 14, an dem über einen Mitnehmer 15 der Hubzylinder 9 angreift. Der Hubzylinder 9 ist über einen Bolzen 16 bei 17 in dem Gehäuseteil 18 abgestützt. Das Klemmelement 10 ist seinerseits gabelförmig ausgebildet und wirkt mit dem Klemmbalken 14 zusammen, der seinerseits eine Klemmschiene 19 hat, die unter Zwischenschaltung von Federelementen 20 und 21 auf dem Klemmbalken auswechselbar gehaltert ist. Das gabelförmige Klemmelement 10 kann mithin die Klemmschiene 19 und bereichsweise den Klemmbalken 14 übergreifen und dazwischen eine Umhüllungs- oder Verpackungsmaterialbahn an der Klemmschiene 19 festklemmen, wenn der Hubzylinder 9 in seine ausgefahrene Position gebracht ist, wie dies Fig. 5 zeigt. In dieser Position ist das rückwärtige Ende 11 bzw. die Bolzenschraubverbindung 12 des Klemmelementes 10 innerhalb der Längsführung 13 vollständig nach hinten bewegt, so dass das Klemmelement 10 mitsamt dem Klemmbalken 14 eine in etwa waagerechte Lage einnimmt.

An dem Klemmbalken 14 ist darüber hinaus noch ein Kraftspeicher 22 in Gestalt einer Druckfeder vorgesehen. Nach der Überführung des Klemmelementes 10 in die in Fig.1 dargestellte Klemmstellung drückt das Klemmelement 10 den Kraftspeicher 22 zusammen. Wird der Hydraulikzylinder 9 drucklos gestellt, kann der Kraftspeicher 22 das Klemmelement 10 in eine solche Betriebsstellung anheben bzw. leicht verschwenken, in der die Klemmung des Umhüllungs- bzw. Verpackungsmaterials nicht mehr weiter fortbesteht. Dabei wird sich das Klemmelement 10 allerdings auch nur um einen solchen Bereich anheben, wie es die Auslenkung des Kraftspeichers 22 vorgibt. Danach wird das Umhüllungs- oder Verpackungsmaterial von dem Klemmelement 10 nur noch geführt, jedoch nicht mehr festgeklemmt gehalten.

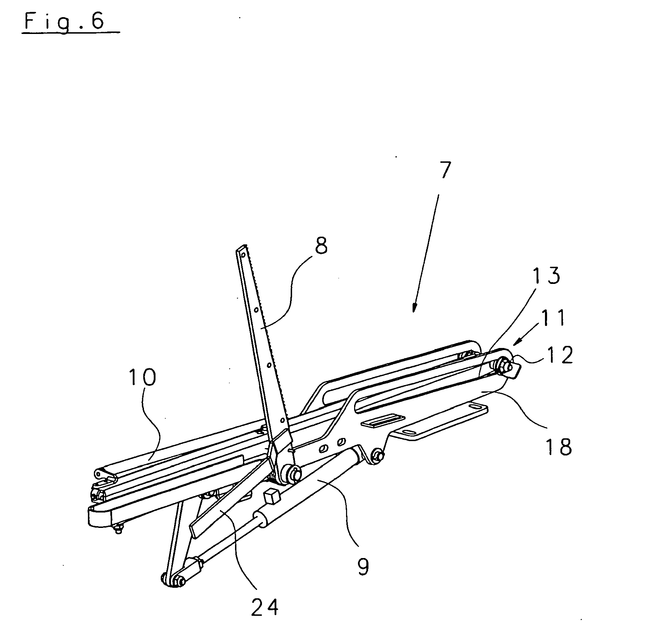

In Fig. 4 ist der Hydraulikzylinder eingefahren dargestellt und hat mithin den Mitnehmer 15 in Richtung des Hydraulikzylinders 9 bewegt, so dass aufgrund der schwenkbeweglichen Halterung durch den Bolzen 14.1 innerhalb des Gehäuses 18 der Klemmbalken 14 mitsamt der Klemmschiene 19, den Federelementen 20 und 21 sowie dem Kraftspeicher 22 verschwenkt ist in die hochgeschwenkt dargestellte Öffnungsstellung. Aufgrund seiner gelenkigen Verbindung bei 23 mit dem Klemmelement 10 ist dieses ebenfalls in die hochgeschwenkte Öffnungsstellung verschwenkt, und zwar unter Heranziehung des Endes 11 bzw. der Bolzenschraubverbindung 12 in der Schlitzführung 13. In dieser Position kann mittels dieser geöffneten Zange, gebildet durch das Klemmelement 10, und den Klemmbalken 14, ein Fangen des Umhüllungs- bzw. Verpackungsmaterials erfolgen und gleichfalls während des Hindurchführens umgelegt bzw. gefaltet werden, so dass die Umhüllungsbahn auf etwa die Hälfte ihrer Breite oder weniger zusammengelegt ist und mithin mehrlagig nach der Betätigung des Hydraulikzylinders durch das Klemmelement 10 festgeklemmt werden kann. Für einen nachfolgenden Trennvorgang, mit Hilfe des als Schneidmesser ausgebildeten Trennelementes 8, das sich in seiner Außerbetriebsstellung in etwa parallel zum Klemmelement 10 erstreckt (siehe auch Fig. 5), ist mittels eines Hebels 24 das Trennelement 8 hoch zu verschwenken (Fig.6) und kann somit das umgelegte bzw. gefaltete Umhüllungs- bzw. Verpackungsbahnmaterial durchtrennen bzw. so perforieren, dass es bei weiterer Zugbelastung reißt. Das Loslassen des Umhüllungs- und Verpackungsmaterials ist bei der vorliegenden Vorrichtung in steuerungstechnisch einfacher Weise allein dadurch zu vollziehen, daß der Hydraulikzylinder 9 drucklos geschaltet wird, wonach die nachfolgende Freigabebewegung allein durch die Auslenkung des Kraftspeichers 22 vollzogen wird.

## Patentansprüche

1. Vorrichtung zum Umhüllen oder Verpacken von insbesondere landwirtschaftlichen Erntegutballen mit einer Wickeleinheit und einer dieser zugeordneten Wickeltischeinrichtung (3) zur Aufnahme des Erntegutballens, wobei nach dem Umhüllen bzw. Verpacken des Erntegutballens eine Umhüllungs- oder Verpackungsmaterialbahn (5) mittels eines Trennelements (8) beaufschlagbar ist, wobei das Trennelement (8) bewegbar abgestützt und aus einer Außerbetriebsstellung in eine die Umhüllungs- oder Verpackungsmaterialbahn (5) beaufschlagende Betriebsstellung überführbar ist, **dadurch gekennzeichnet, dass** das Trennelement (8) in Zusammenwirkung mit einem Klemmelement (10) und einem Klemmbalken (14) die Umhüllungs- und Verpackungsmaterialbahn (5) während des Trennvorgangs einklemmt, wobei das Klemmelement (10) und der Klemmbalken (14) schnabelförmig auf und zu bewegbar sind und eine Faltung der Umhüllungs- oder Verpackungsmaterialbahn (5) auf etwa die Hälfte ihrer Breite oder weniger erfolgt,
wobei das Klemmelement (10) von einem Stellmittel (9) in eine hochverschwenkte Öffnungsstellung und aus dieser von dem Stellmittel (9) in seine Klemmstellung überführbar ist.

2. Vorrichtung nach Anspruch 1, **dadurch gekennzeichnet, dass** das Trennelement (8) verschwenkbar abgestützt ist.

3. Vorrichtung nach Anspruch 1 oder 2, **dadurch gekennzeichnet, dass** das Trennelement (8) aus einer im wesentlichen horizontal ausgerichteten Außerbetriebsstellung in eine im wesentlichen aufrechten oder geneigt zur Vertikalen ausgerichteten Betriebsstellung überführbar ist.

4. Vorrichtung nach Anspruch 3, **dadurch gekennzeichnet, dass** das Trennelement (8) aus einer horizontalen Außerbetriebsstellung hin zu einer, von einem Wickelkörper zum, auf der Wickeltischeinrichtung (3) gelegenen Erntegutballen geführten Umhüllungs- oder Verpackungsmaterialbahn (5) gerichteten Bewegung in die Betriebsstellung überführbar ist.

5. Vorrichtung nach einem der Ansprüche 1 bis 4, **dadurch gekennzeichnet, dass** die Wickeltischeinrichtung (3) beweglich ausgebildet ist und das Trennelement (8) für eine Überführung in die Betriebsstellung durch eine Bewegung der Wickeltischeinrichtung (4) aktivierbar ist.

6. Vorrichtung nach Anspruch 5, **dadurch gekennzeichnet, dass** die Wickeltischeinrichtung (3) einen, in eine schräggestellte Entladestellung überführbaren Wickeltisch aufweist und das Trennelement (8) einen Mitnehmer (24) hat, der von dem Wickeltisch beaufschlagbar ist.

7. Vorrichtung nach einem der Ansprüche 1 bis 6, **dadurch gekennzeichnet, dass** dem Trennelement (8) ein Klemmelement (10) mit einem Stellmittel (9) zugeordnet ist, das gegen die Kraft eines Kraftspeichers (22) in seine Klemmstellung überführbar und von dem Kraftspeicher (22) in eine außerhalb der Klemmstellung gelegene sowie von dem Kraftspeicher (22) vorgebbare Betriebsstellung bewegbar ist.

8. Vorrichtung nach Anspruch 7, **dadurch gekennzeichnet, dass** das Klemmelement (10) von dem Kraftspeicher (22) in einer Drucklosstellung des Stellmittels (9) in seine von dem Kraftspeicher (22) vorgebbare Betriebsstellung bewegbar ist.

9. Vorrichtung nach einem der Ansprüche 7 bis 8, **dadurch gekennzeichnet, dass** der Kraftspeicher (22) als Druckfeder ausgebildet ist.

10. Vorrichtung nach einem der Ansprüche 7 bis 9, **dadurch gekennzeichnet, dass** das Klemmelement (10) relativ zu einem den Kraftspeicher (22) tragenden Klemmbalken (14) bewegbar ist und eine Klemmzange ausgebildet.

11. Vorrichtung nach einem der Ansprüche 1 bis 10, **dadurch gekennzeichnet, dass** das Klemmelement (10) einenends in einer Führung (13) geführt und in dieser translatorisch bewegbar ist.

12. Vorrichtung nach einem der Ansprüche 1 bis 11, **dadurch gekennzeichnet, dass** das Klemmelement (10) über den Klemmbalken (14) in die hochverschwenkte Öffnungsstellung überführbar ist.

13. Vorrichtung nach einem der Ansprüche 1 bis 12, **dadurch gekennzeichnet, dass** der Klemmbalken (14) eine elastisch abgestützte Klemmschiene trägt.

14. Vorrichtung nach einem der Ansprüche 1 bis 13, **dadurch gekennzeichnet, dass** das Klemmelement (10) gabelförmig ausgebildet ist und den Klemmbalken (14) bereichsweise übergreift.

## Claims

1. Device for wrapping or packaging in particular bales of harvested agricultural material, having a winding unit and, associated with the latter, a winding table means (3) for receiving the bale of harvested material, a web (5) of wrapping or packaging material being able to be applied, after the wrapping or packaging of the bale of harvested material, by means of a dividing member (8), the dividing member (8) being supported to be movable and being able to be transferred from a non-operating position to an operating position in which the web (5) of wrapping or packaging material is applied, **characterised in that** the dividing member (8), in collaboration with a clamping member (10) and a clamping bar (14), holds the web (5) of wrapping or packaging material clamped during the dividing process, the clamping member (10) and the clamping bar (4) being movable to open and close after the fashion of a beak, a fold being made in the web (5) of wrapping or packaging material to approximately half, or less, of its width, the clamping member (10) being able to be transferred by a positioning means (9) to a pivoted-up open position and, by the positioning means (9), from this latter position to its clamping position.

2. Device according to claim 1, **characterised in that** the dividing member (8) is supported in such a way as to be pivotable.

3. Device according to claim 1 or 2, **characterised in that** the dividing member (8) is able to be transferred from a substantially horizontally aligned non-operating position to an operating position which is substantially upright or inclined to the vertical.

4. Device according to claim 3, **characterised in that** the dividing member (8) is able to be transferred from a horizontal non-operating position to the operating position to make a movement directed from a reel core towards the web (5) of wrapping or packaging material which fed onto the bale of harvested material positioning on the winding table means (3).

5. Device according to one of claims 1 to 4, **characterised in that** the winding table means (3) is designed to be movable and the dividing member (8) can be actuated for transfer to the operating position by a movement of the winding table means (4).

6. Device according to claim 5, **characterised in that** the winding table means (3) has a winding table which can be transferred to an inclined unloading position and the dividing member (8) has an entraining means (24) to which force can be applied by the winding table.

7. Device according to one of claims 1 to 6, **characterised in that** the dividing member (8) has associated with it a clamping member (10) having a positioning means (9), which clamping member (10) can be transferred to its clamping position in opposition to the force exerted by a force-storing means (22) and can be moved by the force-storing means (22) to an operating position which is away from the clamping position and which can be preset by the force-storing means (22).

8. Device according to claim 7, **characterised in that**, when the positioning means (9) is in a pressure-off position, the clamping member (10) can be moved by the force-storing means (22) to its operating position which can be preset by the force-storing means (22).

9. Device according to either of claims 7 and 8, **characterised in that** the force-storing means (22) is in the form of a compression spring.

10. Device according to one of claims 7 to 9, **characterised in that** the clamping member (10) can be moved relative to a clamping bar (14) carrying the force-storing means (22) and forms a clamping pincer.

11. Device according to one of claims 1 to 10, **characterised in that** the clamping member (10) is guided in a guide (13) at one end and is movable in translation therein.

12. Device according to one of claims 1 to 11, **characterised in that** the clamping member (10) can be transferred to the pivoted-up open position by means of the clamping bar (14).

13. Device according to one of claims 1 to 12, **characterised in that** the clamping bar (14) carries a resiliently supported clamping rail.

14. Device according to one of claims 1 to 13, **characterised in that** the clamping member (10) is formed to be of a bifurcated shape and a part or parts of it fit over the clamping bar (14).

## Revendications

1. Dispositif pour envelopper des balles, en particulier des balles de produits de récolte, agricoles, à l'aide d'une unité d'enveloppement et une installation d'enveloppement 3 correspondante pour recevoir la balle, et après avoir enveloppé ou entouré la balle de produits agricoles, on applique un élément séparé 8 à la bande de matière d'emballage 5,
l'élément séparateur 8 étant soutenu de manière mobile, passant d'une position de repos à une position de fonctionnement en agissant sur la bande de matière d'emballage 5,
**caractérisé en ce que**
l'élément séparateur 8 coopérant avec un élément de pincement 10 et une barre de pincement 14, pince la bande de matière d'emballage 5 pendant l'opération de séparation,
l'élément de pincement 10 et la barre de pincement 14 sont mobiles à l'ouverture et à la fermeture à la manière d'un bec et le pliage de la bande de matière d'emballage 5 se fait sensiblement sur la moitié de sa largeur ou moins,
l'élément de pincement 10 est commandé par un moyen d'actionnement 9 dans une position d'ouverture relevée et à partir de celle-ci, par le moyen d'actionnement dans sa position de pincement.

2. Dispositif selon la revendication 1,
**caractérisé en ce que**
l'élément séparateur 8 est soutenu en basculement.

3. Dispositif selon l'une quelconque des revendications 1 ou 2,
**caractérisé en ce que**
l'élément séparateur 8 peut passer d'une position de repos pratiquement alignée horizontalement dans une position de fonctionnement, pratiquement redressée ou inclinée par rapport à la direction verticale.

4. Dispositif selon la revendication 3,
**caractérisé en ce que**
l'élément séparateur 8 se transfére d'une position de repos, horizontale, vers la position de fonctionnement par un mouvement dirigé vers la bande de matière d'emballage 5 conduite sur la balle de produits de récolte placée sur l'installation à table d'emballage 3 à partir d corps de bobine.

5. Dispositif selon l'une quelconque des revendications 1 à 4,
**caractérisé en ce que**
l'installation à table d'emballage 3 est mobile et l'élément séparateur 8 peut être activé par un mouvement de l'installation à table d'emballage 4 pour passer en position de fonctionnement.

6. Dispositif selon la revendication 5,
**caractérisé en ce que**
l'installation à table d'emballage 3 comporte une table d'emballage qui peut être mise dans une position de décharge inclinée et l'élément séparateur 8 comporte un organe d'entraînement 24 sollicité par la table d'emballage.

7. Dispositif selon l'une quelconque des revendications 1 à 6,
**caractérisé en ce qu'**
un élément de pincement 10 avec un moyen d'actionnement 9 est associé à l'élément séparateur 8, ce moyen d'actionnement pouvant être conduit contre la force d'un accumulateur de force 22, dans une position de pincement et par l'accumulateur de force 22, dans une position de fonctionnement en dehors de la position de pincement et prédéfinie par l'accumulateur de force 22.

8. Dispositif selon la revendication 7,
**caractérisé en ce que**
l'élément de pincement 10 est déplacé par l'accumulateur de force 22 dans sa position de fonctionnement prédéfinie par l'accumulateur de force 22 lorsque le moyen d'actionnement 9 est dans sa position hors pression.

9. Dispositif selon l'une quelconque des revendications 7 et 8,
**caractérisé en ce que**
l'accumulateur de force 22 est un ressort de compression.

10. Dispositif selon l'une quelconque des revendications 7 à 9,
**caractérisé en ce que**
l'élément de pincement 10 est mobile par rapport à une barre de pincement 14 portant l'accumulateur de force 22 et réalisée comme pince.

11. Dispositif selon l'une quelconque des revendications 1 à 10,
**caractérisé en ce que**
l'élément de pincement 10 est guidé par une extrémité dans un guide 13 dans lequel il est mobile en translation.

12. Dispositif selon l'une quelconque des revendications 1 à 11,
**caractérisé en ce que**
l'élément de pincement 10 est conduit par la barre de pincement 14 dans une position d'ouverture relevée.

13. Dispositif selon l'une quelconque des revendications 1 à 12,
**caractérisé en ce que**
la barre de pincement 14 est un rail de pincement soutenu élastiquement.

14. Dispositif selon l'une quelconque des revendications 1 à 13,
**caractérisé en ce que**
l'élément de pincement 10 est en forme de fourche et chevauche par zone, la barre de pincement 14.
